# EUROPEAN PATENT APPLICATION

(11) **EP 3 933 740 A1**
(43) Date of publication of application: **05.01.2022**
(21) Application number: 19920986.7
(22) Date of filing: 27.03.2019
(51) Int. Cl.: G06Q 30/02

(54) **ITEM PROPOSAL SYSTEM**

(71) Applicant: Nippon Food Manufacturer Co., Sapporo-shi, Hokkaido, 063-0841 (JP)
(72) Inventor: TOBE, Ken Luis, Sapporo-shi, Hokkaido 063-0841 (JP)
(74) Representative: Schön, Christoph
(86) International application number: PCT/JP2019/013337
(87) International publication number: WO 2020/194596

(57) **Abstract**

An item proposal system proposes an appropriate item even to a user accessing a website for the first time. A D/B 8 accumulates reference information in which a reference item, a reference phrase, and a reference attribute as an attribute of a target customer are associated with each other. Pieces of reference information having the same reference phrase constitute an information group. An extraction unit 31 extracts a user phrase based on record information acquired from a terminal 3. An information group detection unit 32 detects an extraction information group corresponding to a reference phrase that matches the user phrase. An item proposal unit 34 selects, as a proposed item, a reference item of a non-extraction information group that is an information group other than the extraction information group and whose reference attribute correlates with a reference attribute of the extraction information group.

## Description

### Technical Field

The present invention relates to an item proposal system that proposes, to a user visiting a website, items according to the consumption tendency of the user.

### Background Art

There is a conventionally known advertisement distribution system that, when a terminal of a user accesses a predetermined website through a browser, acquires cookie information held by the browser, detects an item field the user is interested in based on the acquired cookie information, and displays advertisements for the detected item field on the browser of the user (for example, Patent Literature 1).

Patent Literature 2 discloses an information distribution system that acquires browsing history from a user terminal and also collects behavior history of the user terminal, and displays, on a display device near the user, video according to the consumption tendency of the user based on the browsing history and the behavior history. In this information distribution system, the behavior history is, for example, information of how the user carrying the user terminal moved in the store (e.g. whether the user stopped at or passed by the sweets section). Thus, the information distribution system can analyze the customer division of the user with higher accuracy than when analyzing the customer division based on only the browsing information of the user, and present information of items according to the customer division to the user.

### Citation List

### Patent Literatures

Patent Literature 1: Japanese Patent No. 5843983
Patent Literature 2: Japanese Patent No. 6337332

### Summary of Invention

### Technical Problem

There is a need to present, even to a user accessing a predetermined information presentation website on the Internet for the first time, items according to the consumption tendency of the user.

However, in the advertisement distribution system in Patent Literature 1, items the user is interested in are limited to items that can be extracted from the cookie information.

In such a conventional advertisement distribution system, it is impossible to detect, for a user accessing the website for the first time, a field of high interest for the user and find items of the field despite the field being different from a field of items that can be extracted from cookie information of the terminal of the user.

In the information distribution system in Patent Literature 2, the user's favorite items cannot be determined unless the behavior of the user visiting the store is observed for a while after the browsing history is acquired from the user terminal of the user. Moreover, such items are items in which the user directly shows interest as detected from the user's behavior, and are not items that are not related to the items in which the user directly shows interest but comply with the consumption attribute of the user.

The present invention has an object of providing an item proposal system capable of proposing, to a user accessing a website for the first time, at least one item complying with the consumption attribute of the user even though the item belongs to a field that cannot be extracted from record information of a terminal of the user alone.

### Solution to Problem

An item proposal system according to the present invention includes: a server communicable with a plurality of terminals; and a database connected to the server. The server including a processor and a storage device including computer program code executed by the processor. The storage device and the computer program code are configured to cause the processor to: accumulate, in the database, reference information in which each item as a reference item, a reference phrase as a phrase associated with the reference item, and a reference attribute as an attribute of a target customer for which the reference item is intended are associated with each other; set reference information having a same reference phrase among the reference information in the database as one information group, and assign, to each information group, a group attribute that characterizes an attribute of the information group based on a reference attribute of reference information belonging to the information group; acquire, from the terminal accessing a first website, record information generated in the terminal as a result of the terminal accessing a second website different from the first website; extract one or more user phrases associated with an item from the acquired record information; detect, as an extraction information group, an information group corresponding to a reference phrase that matches each extracted user phrase; search for a non-extraction information group that is an information group different than the detected extraction information group and whose reference attribute correlates with a reference attribute of the extraction information group; select a reference item of the searched non-extraction information group, as a proposed item; and transmit information of the proposed item, to the terminal.

According to the present invention, a user phrase is extracted from record information acquired from the terminal, an extraction information group corresponding to a reference phrase that matches the user phrase is extracted, and a non-extraction information group that is an information group other than the extraction information group and whose reference attribute correlates with the reference attribute of the extraction information group is searched for. A reference item in the non-extraction information group is then selected as a proposed item. It is therefore possible to propose, to a user accessing a website for the first time, at least one item complying with the consumption attribute of the user even though the item belongs to a field that cannot be extracted from record information of a terminal of the user.

Preferably, in the item proposal system according to the present invention, the reference phrase of the extraction information group and a reference phrase of the non-extraction information group do not overlap even partially in phrase concept.

With this structure, the reference item corresponding to the reference phrase that conceptually does not overlap even partially with and is not identical to the user phrase that can be extracted from the record information can be proposed to the user.

Preferably, in the item proposal system according to the present invention, the reference phrase of the extraction information group and a reference phrase of the non-extraction information group either overlap only partially in phrase concept or are in a relationship of a broader concept and a narrower concept.

With this structure, the reference item corresponding to the reference phrase that either conceptually overlaps only partially (i.e. overlaps not in the central region of the concept but in the peripheral region of the concept) with the user phrase that can be extracted from the record information or is a broader concept or a narrower concept of the user phrase can be proposed to the user.

Preferably, the item proposal system according to the present invention, wherein the storage device and the computer program code are configured to, with the processor, further cause to: when the terminal accesses the first website for a first time, assign an ID to the terminal and record the assigned ID in the record information of the terminal; determine, for the terminal accessing the first website, the number of accesses to the first website by the terminal, based on the ID extracted from the record information of the terminal; and transmit the information of the proposed item to the terminal only when the determined number of accesses is less than or equal to a threshold.

With this structure, for a user of a terminal whose number of accesses exceeds the threshold, the proposal of the reference item in the non-extraction information group is canceled. This prevents long-continued proposal of such a reference item that is associated with some uncertainty on whether it complies with the consumption attribute of the user.

Preferably, the item proposal system according to the present invention, wherein the storage device and the computer program code are configured to, with the processor, further cause to: store and accumulate, each time the terminal accesses the first website, result information relating to an item-related processing operation by the terminal on the first website; and when the determined number of accesses is greater than the threshold, search, as a result-related item, an item relating to the stored-and-accumulated result information and transmit, to the terminal, information of the searched result-related item.

With this structure, as soon as the reliability of the result information increases, the item proposal to the user can be shifted from extracted phrase-based proposal to result information-based proposal.

Preferably, in the item proposal system according to the present invention, each piece of reference information is generated based on answer information of one or more answerers to a questionnaire relating to the reference item, the reference phrase, and the reference attribute.

With this structure, the reference information for each reference item is generated based on each person's answers rather than by a machine. In this way, the proposed item can be made closer to persons' sensitivities.

Preferably, in the item proposal system according to the present invention, the questionnaire includes, for each item, questions causing the answerer to answer a first phrase little influenced by a subjective view of the answerer and a second phrase greatly influenced by the subjective view of the answerer, and wherein the reference phrase is a combination of one or more first phrases and zero or more second phrases.

With this structure, the reference phrase is a combination of one or more first phrases and zero or more second phrases. Thus, various reference information and information groups are generated for the same reference item, with it being possible to cope with the diversity of the consumption attribute of the user.

Preferably, in the item proposal system according to the present invention, when a store owner of an intermediary virtual store provides a link to an original item sold in an original virtual store of another person to select the item as an intermediary item presented in the intermediary virtual store, the answer information is based on an answer by the store owner, to the questionnaire regarding the intermediary item.

Answering a questionnaire requires time and effort and is troublesome for an answerer, and accordingly it is difficult to force the answerer to answer the questionnaire. Collecting useful answer information is thus time consuming. With this structure, the questionnaire is conducted on the store owner of the intermediary virtual store that can be expected to benefit from answering the questionnaire, so that the answer information collection speed can be increased.

Preferably, in the item proposal system according to the present invention, each intermediary virtual store is associated with a predetermined market segment.

With this structure, the intermediary virtual store which is the answerer is associated with the predetermined market segment. Hence, the store owner of the intermediary virtual store which is the answerer answers the questionnaire from the viewpoint of the market segment set for the items of his or her intermediary virtual store. Therefore, each store owner can easily entice users close to his or her sensitivity into his or her intermediary virtual store through proposed items, and each user can receive proposed items close to his or her sensitivity.

Preferably, in the item proposal system according to the present invention, each intermediary virtual store is provided on the first website.

With this structure, the operator of the item proposal system is an operator that presides over the intermediary virtual stores, with it being possible to enhance the operation efficiency as a whole.

### Brief Description of Drawings

FIG. 1 is a schematic diagram of an overall network system in which an item proposal system is incorporated.
FIG. 2 is a hardware diagram of the item proposal system.
FIG. 3 is a functional block diagram of an item proposal server.
FIG. 4 is a diagram illustrating items of green tea drinks.
FIG. 5 is a diagram illustrating items of soccer shoes.
FIG. 6 is a diagram illustrating a type A questionnaire.
FIG. 7 is a diagram illustrating a type B questionnaire.
FIG. 8 is a diagram illustrating answers to the type A questionnaire regarding items of green tea.
FIG. 9 is a diagram illustrating answers to the type A questionnaire regarding items of soccer shoes.
FIG. 10 is a diagram illustrating answers to a type B questionnaire regarding items of soccer shoes.
FIG. 11 is a flowchart of a database maintenance routine performed by the item proposal system.
FIG. 12 is a flowchart of an item proposal routine performed by the item proposal system.
FIG. 13 is a diagram illustrating behavior records extracted by an extraction unit from record information of a terminal accessing a website.
FIG. 14 is a diagram illustrating an example of evaluating a customer division of a user A from an extraction information group.
FIG. 15 is a diagram illustrating an example of non-extraction information groups detected by a search unit in the item proposal routine in FIG. 12.
FIG. 16 is a diagram illustrating a network environment to which a virtual store provision system is applied.
FIG. 17 is a diagram illustrating functional blocks in the virtual store provision system in the network environment in detail.
FIG. 18 is a flowchart of an admission process by the virtual store provision system.
FIG. 19 is an explanatory diagram of an operation of each member selecting a member item to be posted on a member virtual store of the member using an application provided form the virtual store provision system.
FIG. 20 is a diagram illustrating an example of a portal site of the virtual store provision system.

### Description of Embodiments

### [Structure of embodiment]

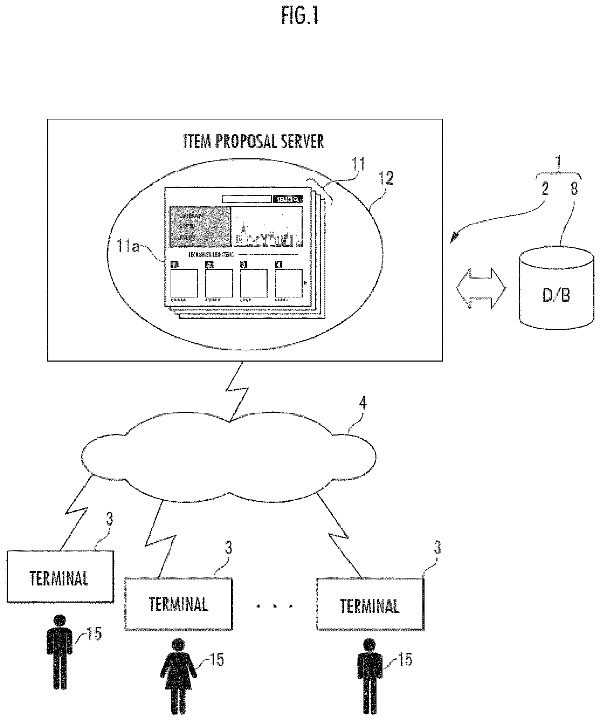

FIG. 1 is a schematic diagram of an overall network system in which an item proposal system 1 is incorporated. The network system includes the item proposal system 1 and a plurality of terminals 3 that transmit and receive data via Internet 4 as a network. The item proposal system 1 includes an item proposal server 2 and a database (D/B) 8.

In the illustrated example, the item proposal server 2 is connected to the D/B 8 by an intranet or a dedicated cable. The D/B 8 may be connected to the item proposal server 2 via the Internet 4. The item proposal server 2 is capable of adding, updating, or deleting data accumulated in the D/B 8.

Each terminal 3 is, for example, an information processor such as a personal computer, a tablet PC, or a smartphone. A user 15 of each terminal 3 operates the terminal 3 to transmit and receive information to and from the item proposal server 2.

A website 12 in the item proposal server 2 is assigned a domain by URL The user 15 of each terminal 3 designates the URL of the website 12 on a browser implemented in the terminal 3 as an application, and thus can browse any web page 11 on the website 12 from the terminal 3.

One of a plurality of web pages 11 is an item presentation page 11a. The item presentation page 11a is a web page of a portal site on the website 12.

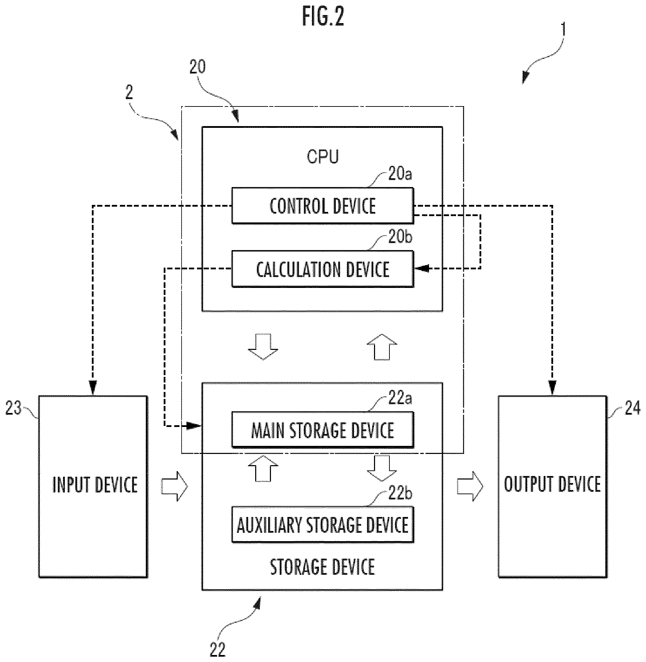

FIG. 2 is a hardware diagram of the item proposal system 1. The wavy arrows indicate flows of control signals between elements. The solid arrows indicate flows of data between elements.

The item proposal system 1 includes a CPU 20, a storage device 22, an input device 23, and an output device 24 as hardware. The CPU 20 includes a control device 20a and a calculation device 20b. The storage device 22 includes a main storage device 22a and an auxiliary storage device 22b. The main storage device 22a is volatile memory, and the auxiliary storage device 22b is non-volatile memory.

The CPU 20 and the main storage device 22a belong to the item proposal server 2, and transmit and receive data via a bus (not illustrated). The auxiliary storage device 22b includes the D/B 8. Processes relating to operation of the item proposal system 1 are performed by the CPU 20 executing a program stored in the auxiliary storage device 22b. In FIG. 1, the D/B 8 also serves as the input device 23 and the output device 24, as an external storage device of the item proposal server 2.

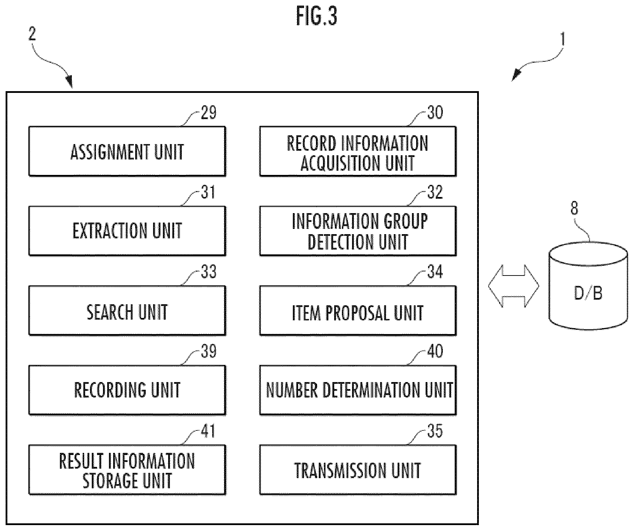

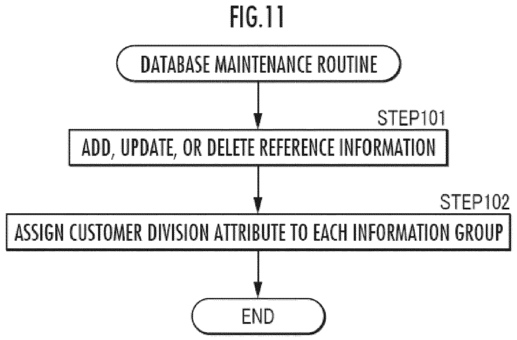

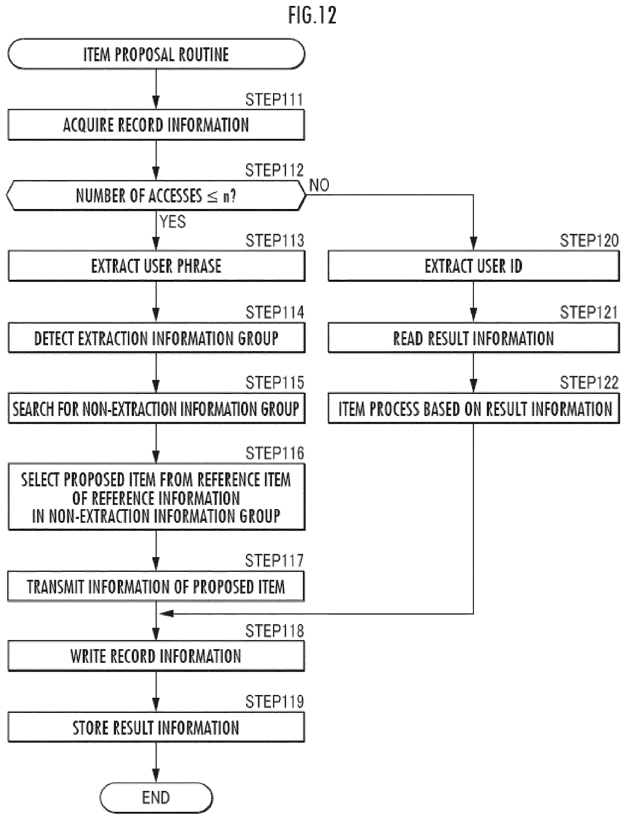

FIG. 3 is a functional block diagram of the item proposal server 2. The item proposal server 2 includes an assignment unit 29, a record information acquisition unit 30, an extraction unit 31, an information group detection unit 32, a search unit 33, an item proposal unit 34, and a transmission unit 35 as functional blocks generated as a result of execution of software. The item proposal server 2 further includes a recording unit 39, a number determination unit 40, and a result information storage unit 41 as functional blocks. These functional blocks will be described in detail later, with reference to FIGS. 11 and 12.

### [Items]

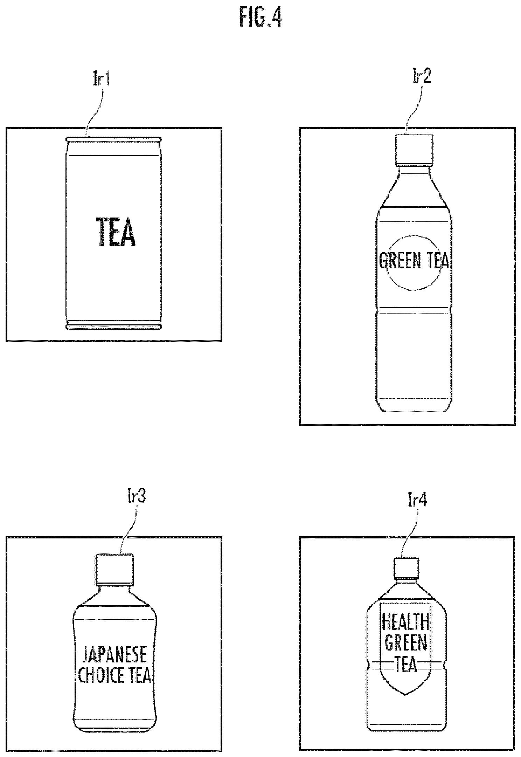

FIG. 4 illustrates items Ir1 to Ir4 of green tea drinks. The items Ir1 to Ir4 are different items, although they have the same generic name of green tea.

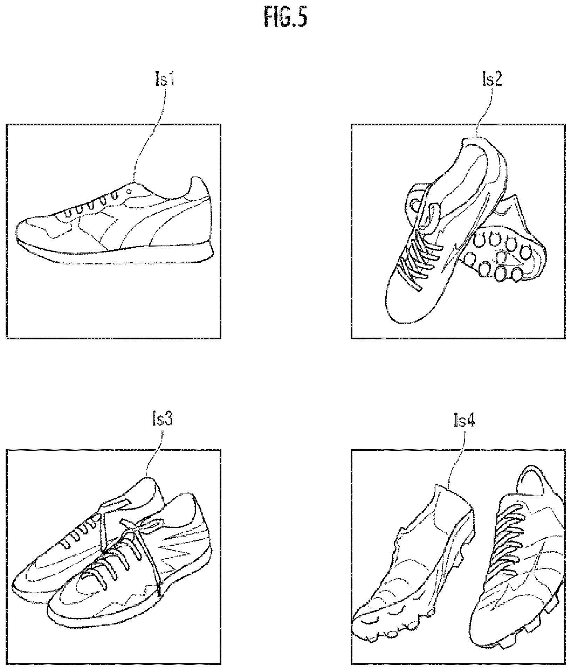

FIG. 5 illustrates items Is1 to Is4 of soccer shoes. The items Is1 to Is4 are different items, although they have the same generic name of soccer shoes.

When individual items (e.g. the items Ir1 to Ir4 and the items Is1 to Is4) are not distinguished from each other, they are collectively referred to as "items I".

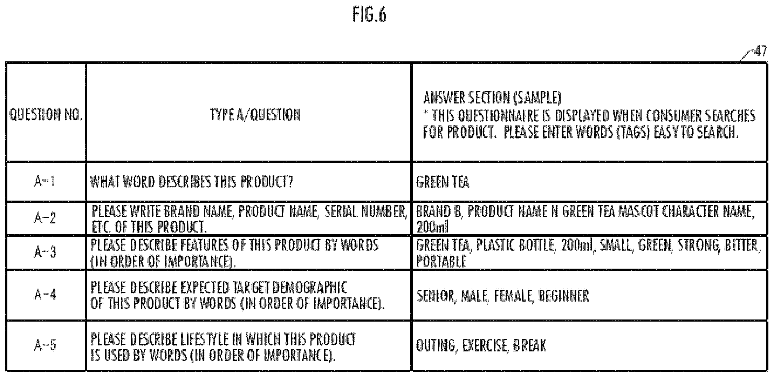

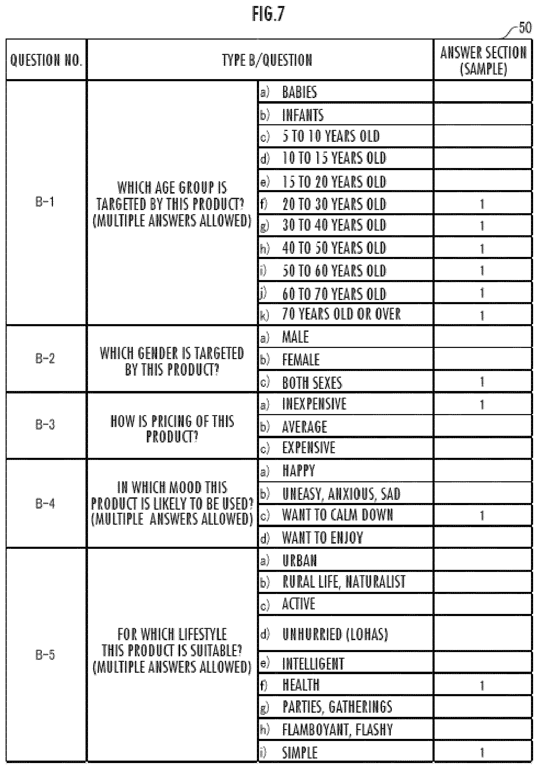

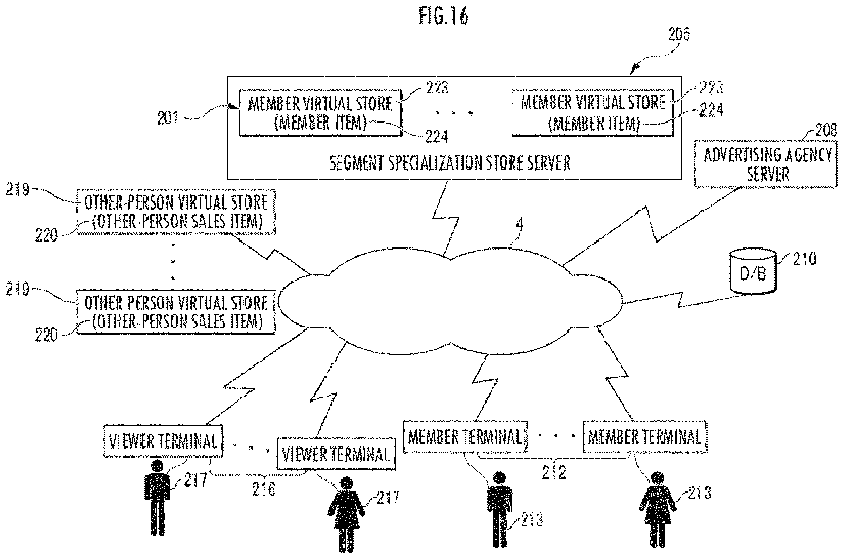

FIGS. 6 and 7 illustrate a type A questionnaire 47 and a type B questionnaire 50 respectively. Reference information accumulated in the D/B 8 is generated based on answerers' answers to the questions in the type A questionnaire 47 and the type B questionnaire 50. The answerers are, for example, the store owners of the below-described member virtual stores 223 (FIG. 16). The operator of the item proposal system 1 recruits answerers (who may be staff of the operating company) as appropriate, conducts, for each item I, the type A questionnaire 47 and the type B questionnaire 50 on each recruited answerer, and gradually increases the amount of reference information accumulated in the D/B 8 or update the reference information.

For one item I, both the type A questionnaire 47 and the type B questionnaire 50 are conducted simultaneously. A plurality of answerers answer for each item I. Each answerer typically answers for a plurality of different items I. A unit of reference information in the D/B 8 corresponds to one answerer's answers to a set of questions of the type A questionnaire 47 and the type B questionnaire 50 for one item I.

In a typical embodiment of a questionnaire for an item I, an answerer of the questionnaire answers the questionnaire on a questionnaire screen of a web page, or transmits the answer via e-mail. In another embodiment, the questionnaire may be in written form. In such a case, answer information of a collected answer sheet is converted into electronic data by OCR or the like.

Each answerer answers the questions of both the type A questionnaire 47 and the type B questionnaire 50 from a consumer point of view or a seller point of view. An answerer who answers from a consumer point of view is, when purchasing an item I, required to answer from a perspective of consumption attributes associated with his or her lifestyle. An answerer who answers from a seller point of view is, when operating a virtual store collecting an item I of a predetermined market segment, required to answer from a perspective of target customers for which the item is intended.

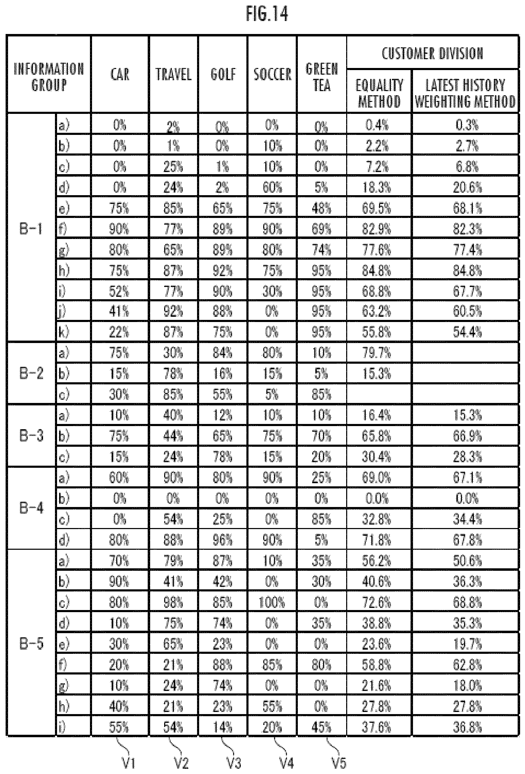

Answer information from either perspective defines the consumption attribute of the consumer interested in the item I. The consumption attribute of the consumer specifies the customer division of the consumer for the item I (see FIG. 14 described later). Each item I belongs to a market segment corresponding to a consumption attribute of a consumer. The same item I belongs to a plurality of market segments according to different consumption attributes.

### [Questionnaire and answer information]

FIG. 6 illustrates example answers to the type A questionnaire 47 for the item Ir1 in FIG. 4, and FIG. 7 illustrates example answers to the type B questionnaire 50 for the item Ir1 in FIG. 4. Such example answers can be presented to answerers for reference when the answerers answer the questionnaire.

An answer by an answerer to each question in the type A questionnaire 47 is in descriptive form. An answer by an answerer to each question in the type B questionnaire 50 is in check mark form. In the type B questionnaire 50, each check mark given by the answerer is indicated by the number "1", for illustrative convenience.

The questions in the type A questionnaire 47 include questions for which answers are likely to vary among answerers and questions for which answers are not likely to vary among answerers. A question for which answers vary among answerers is a question that is answered strongly reflecting the subjective view of the answerer. In FIG. 6, the questions of question numbers A-1 to A-3 are each a question to be answered with a first phrase that varies little among answerers. The questions of question numbers A-4 to A-5 are each a question to be answered with a second phrase that varies much among answerers.

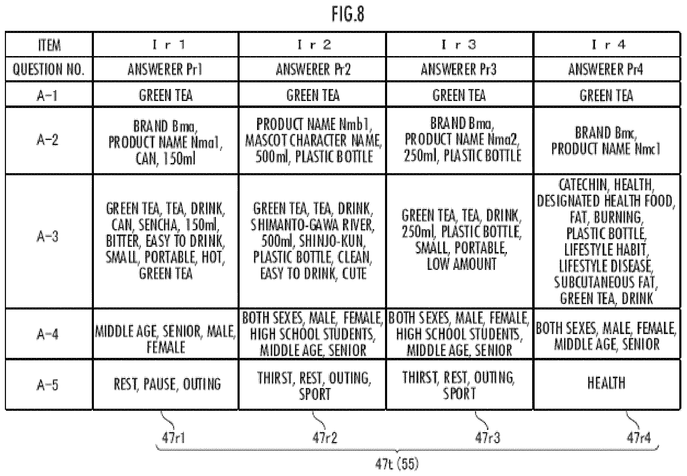

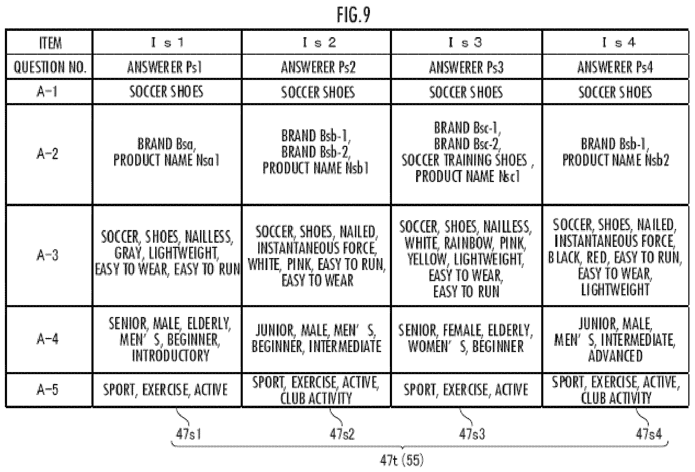

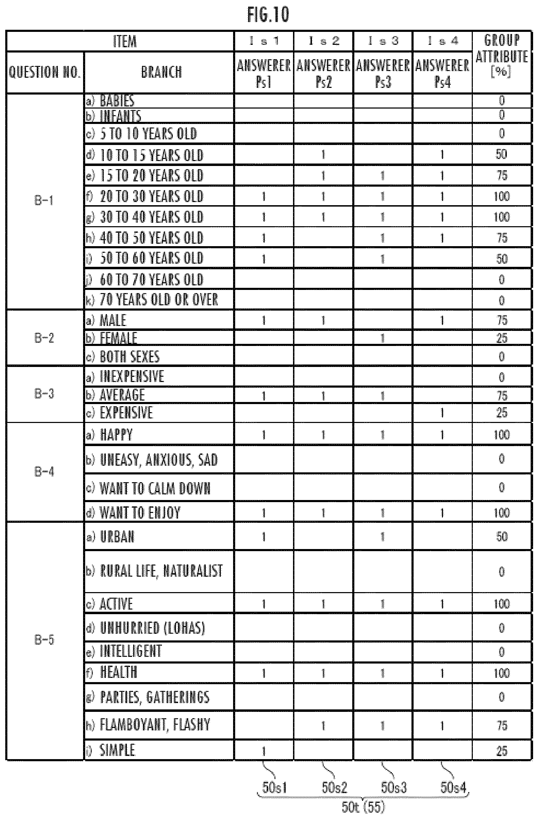

FIG. 8 illustrates answers 47r1 to 47r4 of answerers Pr1 to Pr4 to the type A questionnaire 47 for the items Ir1 to Ir4 respectively. FIG. 9 illustrates answers 47s1 to 47s4 of answerers Ps1 to Ps4 to the type A questionnaire 47 for the items Is1 to Is4 respectively. FIG. 10 illustrates answers 50s1 to 50s4 of the answerers Ps1 to Ps4 to the type A for the items Is1 to Is4 respectively. The answerers Pr1 to Pr4 are persons different from each other, and the answerers Ps1 to Ps4 are persons different from each other. Meanwhile, at least one of the answerers Pr1 to Pr4 and at least one of the answerers Ps1 to Ps4 may be the same person (i.e. common person). This is because the reference phrases (e.g. green tea and soccer) of the items are different.

When individual answerers are not distinguished from each other, they are collectively referred to as "answerers P". When individual answers to the type A questionnaire are not distinguished from each other, they are collectively referred to as "answers 47t". When individual answers to the type B questionnaire are not distinguished from each other, they are collectively referred to as "answers 50t". When the answers 47t and 50t are not distinguished from each other, they are collectively referred to as "answers 55".

FIGS. 8 to 10 each illustrate only an answer 55 of one answerer P per one item I. When actually conducting questionnaires in the item proposal system 1, a plurality of answerers P answer for each item I and each answerer P answers for a plurality of items I, in order to collect a large amount of answer information efficiently.

FIG. 11 is a flowchart of a database maintenance routine performed by the item proposal system 1. The terms such as reference information will be defined below, prior to the description of the flowchart.

The "reference information" denotes information in which each item I as a reference item, a reference phrase as a phrase associated with the reference item, and a reference attribute as an attribute of a target customer for which the reference item is intended are associated with each other.

The "phrase" associated with the reference item is typically a generic name of the item I. An answerer is urged to answer a generic name to the question of the question number A-1 in FIG. 6 mentioned above.

The item proposal server 2 accumulates reference information (specifically, data of reference information) for each item I in the D/B 8. The item proposal server 2 also adds, updates, and/or deletes reference information accumulated in the D/B 8 as appropriate. This allows the D/B 8 to hold the latest reference information for each item I.

Specifically, information of an answer 55 (a combination of an answer 47t and an answer 50t) of each answerer P for each item I constitutes one piece of reference information. The phrases (e.g., "GREEN TEA", ... "BRAND Bma", ..., "CAN, 150ml", ..., "BITTER", ..., "MIDDLE AGE", and "SPORT") written in the questions A-1 to A-5 for each answer 47t in FIGS. 8 and 9 are all reference phrases. When the number of reference phrases increases, the processing load of the item proposal server 2 when setting the below-described reference groups increases.

To avoid this, the item proposal server 2 thins out or narrows down reference phrases used to set a reference group. For example, the item proposal server 2 can use, as a reference phrase, only a phrase (generic name of item I) answered to the question A-1, while excluding answer phrases to the other questions from reference phrases.

When associating a plurality of answer phrases to a plurality of questions with one reference phrase, the one reference phrase is a combination of the plurality of answer phrases. The use of such combinations increases reference phrases. When finely classifying customer divisions of users 15 corresponding to market segments, the item proposal server 2 can use such combinations.

The "reference attribute" as the attribute of the target customer for which the reference item is intended is defined as each answer 50t in FIG. 10. The customer division of each user 15 is determined based on the reference attribute. Each answer 50t is answers to questions B-1 to B-5. The item proposal server 2 can narrow down reference attributes as a basis of customer divisions to only the answer to part of the questions B-1 to B-5 rather than the answers to all of the questions B-1 to B-5, as in the case of reducing the processing load for reference phrases mentioned above.

In STEP 101, the item proposal server 2 adds, updates, or deletes reference information. In detail, the item proposal server 2 collects (receives) an answer 55 via the Internet 4 as appropriate. Information of an answer 55 of one answerer P for one item I corresponds to a unit of reference information. The item proposal server 2 accumulates generated reference information in the D/B 8. The item proposal server 2 can also update (including correction) reference information when requested by an answerer P. When, for example, the sale of an item corresponding to reference information ends, the item proposal server 2 can delete the reference information.

In STEP 102, the assignment unit 29 assigns a group attribute to each reference information group accumulated in the D/B 8. Herein, a reference information group is a set of reference information having the same reference phrase among the reference information in the D/B 8.

For example, when only the phrase of the answer to the question A-1 is set as a reference phrase, the answers 47r1 to 47r4 in FIG. 8 have the same reference phrase "green tea", so that four pieces of reference information generated from the answers 47r1 to 47r4 constitute an information group "green tea".

The foregoing combinations can be used when it is allowable to increase the processing load of the item proposal server 2, as mentioned above. In detail, each reference information group may be set where a combination of a phrase of an answer to the question A-1 and one or more phrases from among a plurality of phrases of answers to, for example, the questions A-2 to A-5 is one reference phrase. Moreover, the item proposal server 2 can change reference phrase combinations depending on the situation and execute the below-described proposed item process in FIG. 12.

Specifically, the assignment unit 29 determines the group attribute of each information group in the following manner. For example, four answers 50t in FIG. 10 constitute a reference information group. Each answer 50s1, 50s2, 50s3 or 50s4 is the reference attribute to the reference item such as the soccer shoes (FIG. 9). The assignment unit 29 determines the group attribute (see the right-end column in FIG. 10) that characterizes the attribute of the information group, for each information group, based on the reference attribute of the reference information. The reference information includes the reference item (e.g., the sport shoes) and the reference attribute (e.g., age, cost and the like in FIG, 10) as mentioned before.

Herein, the "group attribute" is, for example, the average value of the reference attributes included in the same information group. For example, there are four answerers P in FIG. 10. The number of answerers whose answers to the question B-1 are "babies", "infants", or "5 to 10 years old" is 0, so that the respective average values are 0%. The number of answerers whose answers to the question B-1 are "10 to 15 years old" is 2, so that the average value is 50%. The number of answerers whose answers to the question B-1 are "15 to 20 years old" is 3, so that the average value is 75%.

Instead of average values, a majority method may be used to set, as the group attribute, answers from the top to a predetermined ordinal position (e.g. third) when arranging answers in descending order of the number of answerers. For example, the most common answers to the question B-1 in FIG. 10 are "20 to 30 years old" and "30 to 40 years old" each with four answerers P. There is no second most common answer. The third most common answers are "15 to 20 years old" and "40 to 50 years old" each with three answerers P. Hence, the group attribute of the target customer of the information group whose reference items are soccer shoes may be determined as 15 to 50 years old.

Although the above describes the group attribute only from an age perspective, the group attribute is typically determined from a plurality of perspectives (e.g. the gender and lifestyle of the target customers).

### [Operation according to embodiment]

FIG. 12 is a flowchart of an item proposal routine performed by the item proposal system 1. The item proposal system 1 executes the item proposal routine, each time access to the website 12 by the terminal 3 is detected.

In STEP 111, the record information acquisition unit 30 acquires, from the terminal 3 accessing the website 12, record information held in the terminal 3. The record information is, for example, a cookie. It is well known that there are two types of cookies, namely, first-party and third-party. When the record information acquisition unit 30 acquires a cookie as record information, the acquired cookie is both first-party and third-party. Consequently, the record information acquisition unit 30 can acquire record information on both the website 12 and another website different than the website 12 the terminal 3 accessed to.

In STEP 112, the number determination unit 40 determines whether the number of accesses to the website 12 by the terminal 3 is less than or equal to a threshold n. The number determination unit 40 can obtain the number of accesses from a user ID in the record information. The user ID is written in the record information in the terminal 3 when the terminal 3 accesses the website 12 for the first time and moves from the website 12 to another website.

In the case where the determination in STEP 112 is affirmative, the number determination unit 40 advances the process to STEP 113. In the case where the determination in STEP 112 is negative, the number determination unit 40 advances the process to STEP 120.

The threshold n in STEP 112 may be an integer not less than 1. For example, the threshold n is set to 1. The number of accesses to the website 12 by the terminal 3 being 1 means that the terminal 3 accesses the website 12 for the first time. When the terminal 3 accesses the website 12 for the first time, the cookie read from the terminal 3 does not include the below-described user ID.

The number determination unit 40 may dynamically set n based on the record information (e.g. information amount) acquired from the terminal 3. Even if the access to the website 12 by the terminal 3 is not first, there is a possibility that the information amount (STEP 122 in FIG. 12) of the below-described result information for the user 15 of the terminal 3 is insufficient and the customer division of the user 15 cannot be determined adequately.

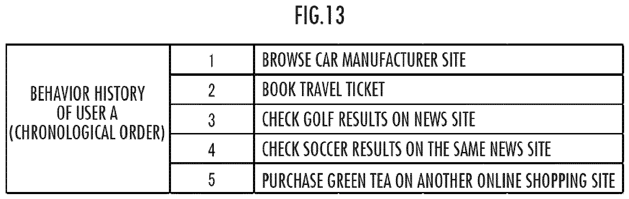

In STEP 113, the extraction unit 31 extracts one or more user phrases associated with an item I from the record information acquired by the record information acquisition unit 30. A specific extraction method will be described below, with reference to FIG. 13.

FIG. 13 illustrates behavior records (or operation records of the user 15 of the terminal 3) extracted by the extraction unit 31 from the record information of the terminal 3 accessing the website 12. The user 15 of the terminal 3 is denoted as "user A", for convenience's sake. The history of the user A's behavior on the Internet 4 using his or her terminal 3 in chronological order is: (1) browse a car site, (2) book a travel ticket, (3) check golf results on a news site, (4) check soccer results on the same news site, and (5) purchase green tea on another online shopping site (site different from the website 12).

When the website 12 is denoted as a first website for convenience's sake, the browsing sites in (1) to (5) are a plurality of second websites different from the first website.

The extraction unit 31 extracts five reference phrases, namely, car, travel, golf, soccer, and green tea, as user phrases of items I, from the five behavior history records of the user A.

In STEP 114, the information group detection unit 32 detects an extraction information group. In detail, the information group detection unit 32 detects an information group corresponding to the reference phrase matching each user phrase extracted by the extraction unit 31, as an extraction information group. The extraction information group is associated with the customer division of the user A and the market segment of the user A through the consumption attribute of the user A, as mentioned above. When the number of extraction information groups is larger, the consumption attribute of the user A can be determined more finely.

FIG. 14 is a diagram illustrating an example of evaluating the customer division of the user A from each extraction information group. B-1 to B5 and a), b), ... in FIG. 14 (illustration partially omitted) are the same as B-1 to B5 and a), b), ... in FIG. 10 described above.

The five information groups such as car(-group), travel (-group) and so on in FIG. 14 match the five reference phrases such as car , travel and so on extracted from the behavior history in FIG. 13. Each reference phrase (e.g., car , travel and so on) in FIG. 13.is a common reference phrase of reference information of each information group (e.g., FIG. 10). The numeric values (%) in each column in FIG. 14 are each the average value (group attribute [%] in each row of FIG. 10).

In FIG. 14, equality method and latest history weighting method are indicated in customer division. In the equality method, (VI + V2 + V3 + V4 + V5)/5, i.e. a value obtained by dividing the sum of the values in each row in FIG. 14 by the number 5, is calculated. In the latest history weighting method, (VI + V2 + V3)/3 + (V4 + V5)/2 is calculated. In the equality method, the average value is calculated. In the latest history weighting method, the customer division is calculated with a more recent behavior history record being assigned a larger weight than an old behavior history record.

The reason why c) of B-2 in the equality method in FIG. 14 is blank is because there is no gender distinction regarding travel and green tea and the question in the questionnaire is inappropriate. Hence, the value (average value) in the equality method in a) and b) of B-2 is a result of division not by 5 but by 3. Likewise, the reason why the cells of a) to c) of B-2 in the latest history weighting method are blank is because gender does not change with time and thus is not suitable for the latest history weighting method.

From numeric value analysis on the equality method and the latest history weighting method in FIG. 14, the customer division of the user A can be predicted as follows.

The customer division of the user A is predicted in the following manner. The user A is likely to be 20 years old to 70 years old, and particularly likely to be 20 years old to 50 years old (B-1). The user A is likely to be male (B-2). The user A is likely to be in middle-income class (B-3). The purposes of purchase of the user A are to be happy, calm, and enjoyable (B-4). The user A is highly health conscious and active (B-5).

Referring back to FIG. 12, in STEP 115, the search unit 33 searches for a non-extraction information group. In detail, the search unit 33 searches for any information groups that are other than the extraction information groups and whose reference attributes correlate with the reference attributes of the extraction information groups, as non-extraction information groups.

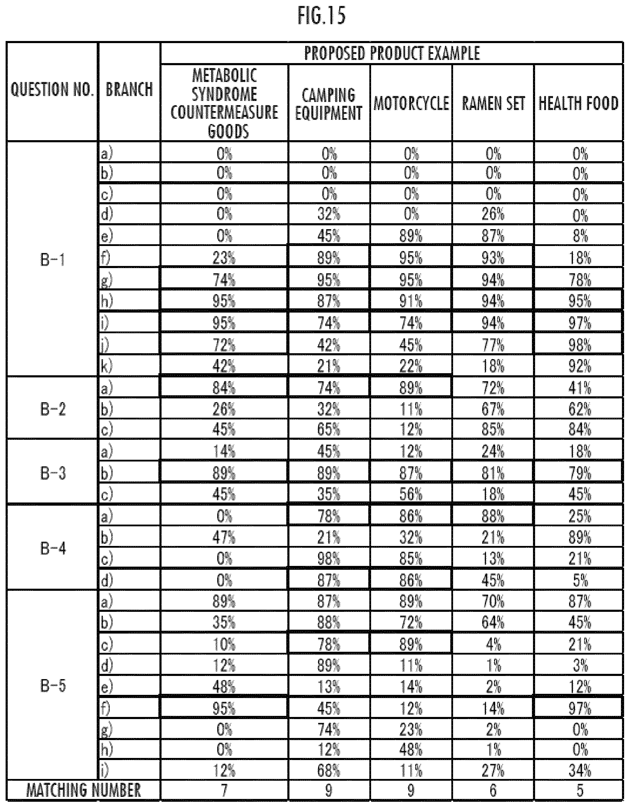

FIG. 15 illustrates non-extraction information groups searched for by the search unit 33 as the result of the process in STEP 115. B-1 to B5 and a), b), ... in FIG. 15 correspond to B-1 to B5 and a), b), ... in FIG. 14. In FIG. 15, the thick-frame cells are each a cell having a value of 70% or more and matching the prediction of the customer division for the user A mentioned above.

In FIG. 15, "metabolic syndrome countermeasure goods", "camping equipment", "motorcycle", "ramen set", and "health food" each constitute one information group, as with each of "car", "travel", "golf', "soccer", and "green tea" in FIG. 14. The information groups such as "car" in FIG. 14 are extraction information groups, and the information groups such as "metabolic syndrome countermeasure goods" in FIG. 15 are non-extraction information groups.

The reference phrase of one extraction information group randomly selected from a plurality of extraction information groups and the reference phrase of one non-extraction information group selected from a plurality of non-extraction information groups are different.

Suppose one set composed of the reference phrase of any one extraction information group from among a plurality of (five in FIG. 14) extraction information groups and the reference phrase of any one non-extraction information group from among a plurality of (five in FIG. 15) non-extraction information groups is generated. Since the two reference phrases in each set are different, the extraction information group and the non-extraction information group do not match in phrase concept.

There are the following three cases of such mismatch: (a) two reference phrases do not overlap even partially in phrase concept (completely inconsistent); (b) two reference phrases are in a relationship of a superordinate concept and a subordinate concept in phrase concept (hierarchical difference); (c) two reference phrases overlap only partially in phrase concept (partially match).

For example, the set of "car" included as an extraction information group in FIG. 14 and "motorcycle" included as a non-extraction information group in FIG. 15 have the relationship (b). The set of "green tea" included as an extraction information group in FIG. 14 and "health food" included as a non-extraction information group in FIG. 15 have the relationship (c). The set of "ramen set" included as a non-extraction information group in FIG. 15 and any of the extraction information groups in FIG. 14 have the relationship (a).

Referring back to FIG. 12, in STEP 116, the item proposal unit 34 selects at least one reference item of reference information included in the non-extraction information groups searched for by the search unit 33, as a proposed item. In STEP 117, the transmission unit 35 transmits information of the proposed item to the terminal 3.

On a browser screen of the terminal 3 that has received the information of the proposed item from the transmission unit 35, an image (e.g. FIG. 4 and FIG. 5) of the proposed item (reference item) is displayed, and the reference phrase associated with the reference item is displayed as item description (product or service description) of the proposed item.

The selection of proposed items by the item proposal unit 34 will be described below, using the example in FIG. 15. The item proposal unit 34 selects one or more non-extraction information groups from the five non-extraction information groups "metabolic syndrome countermeasure goods", "camping equipment", "motorcycle", "ramen set", and "health food", and selects one or more reference items from each selected non-extraction information group. The item proposal unit 34 sets the selected one or more reference items as proposed items.

After the process in STEP 117 ends, the process advances to STEP 118. STEP 118 is also performed after the end of the process in STEP 120 to STEP 122. STEP 120 to STEP 122 will be described below, prior to the description of STEP 118.

In STEP 120, the record information acquisition unit 30 extracts a user ID (the ID of the terminal 3) from the record information acquired in STEP 111.

In STEP 121, the search unit 33 reads result information stored in the auxiliary storage device 22b by the result information storage unit 41 in association with the extracted user ID. The result information is stored and accumulated in the D/B 8 or the auxiliary storage device 22b by the result information storage unit 41 as processing results by the terminal 3 on the website 12 each time the terminal 3 accesses the website 12 (STEP 119 described later).

In STEP 122, the item proposal unit 34 performs an item process based on the read result information.

A specific process by the item proposal unit 34 based on the result information will be described below. The result information includes item-related processing operation on the website 12 during past access (i.e. access before the current access) to the website 12 by the terminal 3. The item proposal unit 34 analyzes the processing operation to recognize information on an item that the user 15 purchased on the website 12 through the terminal 3; an item that the user 15 checked and did not purchase on the website 12 through the terminal 3; and purchase-date or check date. In the case where the website 12 includes a virtual store, the result information may include information of the domain (which is a subdomain of the domain of the website 12) of the virtual store accessed by the user 15 of the terminal 3.

In a first example of processing, the item proposal unit 34 selects, as a proposed item, an item I belonging to an item classification (including both product classification and service classification) in which the user 15 of the terminal 3 directly show interest, based on the result information.

In a second example of processing, the item proposal unit 34 arranges a plurality of URLs hit as a result of the user 15 searching the item presentation page 11a using a predetermined term as a key in order of correlation with the item classification in the first example, and present the hit results to the user 15.

In a third example of processing, the item proposal unit 34 extracts a plurality of items I (hereafter referred to as "results") from the result information. The extracted phrase in STEP 113 is replaced with the generic name of the result items, and then the process in STEP 114 to STEP 116 is performed and the proposed item as the processing result in STEP 116 is presented to the user 15.

In the third example, the reference information accumulated in the D/B 8 can be used to determine a proposed item for the user 15 who has already accessed the website 12 a plurality of times. Moreover, since the generic name of the result items contributes to more accurate detection of the customer division of the user 15 than the extracted phrase, the proposed item determined in STEP 122 can be an item I highly correlated with the actual customer division of the user 15.

STEP 118 is performed after STEP 117 or STEP 122. The process in STEP 118 and STEP 119 is a process when the terminal 3 moves from the website 12 to another site.

In STEP 118, the recording unit 39 writes record information (e.g. cookie) in the terminal 3. In the case where the current access to the website 12 by the terminal 3 is the first access, the user ID assigned to the terminal 3 by the item proposal server 2 is included. In STEP 119, the result information storage unit 41 writes the result information in the D/B 8 or the auxiliary storage device 22b.

### [Virtual store provision system: structure]

FIGS. 16 to 20 relate to a virtual store provision system 201. The item proposal system 1 accumulates reference information in the D/B 8, as mentioned above. The reference information is based on answer information as a result of conducting questionnaires on answerers. The item proposal system 1 can use the virtual store provision system 201 in order to efficiently collect answer information.

The operator of the item proposal system 1 may operate the item proposal system 1 and the virtual store provision system 201 together. In such a case, the item proposal server 2 in the item proposal system 1 and a segment specialization server 205 in the virtual store provision system 201 can be common.

FIG. 16 is a diagram illustrating a network environment to which the virtual store provision system 201 is applied. The Internet 4 connects the segment specialization server 205, an advertising agency server 208, a database (D/B) 210, a plurality of member terminals 212, a plurality of viewer terminals 216, and a plurality of other-person virtual stores 219 to one another. Each member terminal 212 is operated by a member 213 who is a store owner of a member virtual store 223. Each viewer terminal 216 is operated by a viewer 217 who is a buyer of an item I.

The D/B 210 includes an operation history database, a member information database, and an item selection information database. Each of the member terminals 212 and the viewer terminals 216 is, for example, a smartphone, a tablet PC, or a personal computer. The other-person virtual stores 219 are each typically built in a server connected to the Internet 4.

The virtual store provision system 201 includes software implemented in the segment specialization server 205 connected to the Internet 4, and the D/B 210. The D/B 210 may be connected to the segment specialization server 205 not via the Internet 4 but via an intranet (not illustrated).

Each member 213 exclusively has a member virtual store 223 built by the virtual store provision system 201. Each member virtual store 223 is assigned a subdomain that belongs to a common root domain and is distinguishable from other subdomains. On each member virtual store 223, a member item 224 selected from other-person sales items 220 by the member 213 is posted with a hyperlink to the selected other-person sales item 220.

The plurality of other-person virtual stores 219 are connected to the Internet 4, and post other-person sales items 220 as products and/or services on their web pages in the form of images, text, or the like to sell the other-person sales items 220. Each viewer 217 can directly access the other-person virtual stores 219 from an information device of the viewer 217, and can also access the other-person virtual stores 219 by following the hyperlinks of the member items 224 in the member virtual stores 223 in the segment specialization server 205.

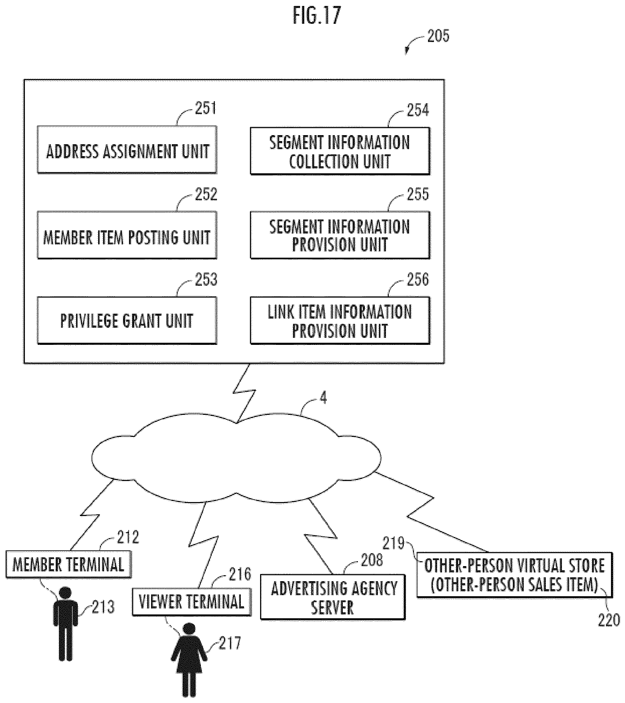

FIG. 17 is a diagram illustrating functional blocks in the virtual store provision system 201 in the network environment in detail. In FIG. 17, only one member terminal 212, one member 213, etc. are illustrated for simplicity's sake, although there are actually a plurality of member terminals 212, members 213, etc.

The virtual store provision system 201 includes an address assignment unit 251, a member item posting unit 252, a privilege grant unit 253, a segment information collection unit 254, a segment information provision unit 255, and a link item information provision unit 256. The segment specialization server 205 has a well-known internal structure of a server (not illustrated). The internal structure includes at least a CPU, RAM, ROM, an input-output I/F, a bus connecting these components, and a hard disk storing an OS and various application programs.

### [Virtual store provision system: admission process]

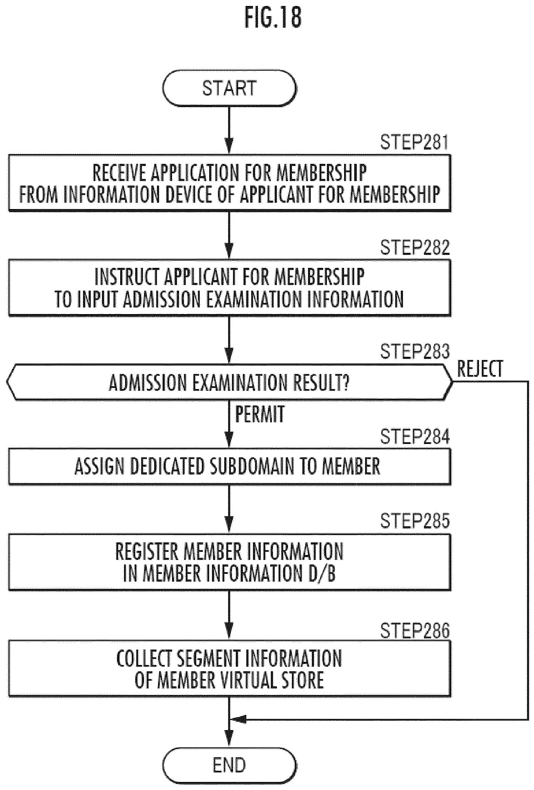

FIG. 18 is a flowchart of an admission process by the virtual store provision system 201. In STEP 281, the address assignment unit 251 receives an application for membership from an information device of an applicant for membership. When the applicant for membership is permitted to join, the applicant for membership becomes a member 213. Access to the virtual store provision system 201 from the applicant for membership is conducted on a browser in the information device of the applicant for membership by designating, with the browser, an admission acceptance web page of the virtual store provision system 201.

In STEP 282, the address assignment unit 251 instructs the applicant for membership to input admission examination information. Specifically, the admission examination information includes a set of personal information such as gender, age, address, telephone number, occupation, educational background, income, family structure, hobby, and bank account.

In STEP 283, the address assignment unit 251 performs admission examination on the applicant for membership based on the admission examination information. In the case where the address assignment unit 251 permits the applicant for membership to join as a result of the admission examination, the process advances to STEP 284. In the case where the address assignment unit 251 rejects the applicant for membership, the admission process ends.

In STEP 284, the address assignment unit 251 assigns a dedicated subdomain to the member 213.

In STEP 285, the address assignment unit 251 registers member information (including the foregoing personal information and subdomain) in the D/B 210. Thus, as the number of members 213 increases, member information is sequentially accumulated in the D/B 210.

After the admission, the member 213 can change the member information as appropriate according to a change in address, telephone number, and the like. Although the member information is collected at the time of the admission of the member 213 in this example, only information necessary for the admission examination may be collected at the time of the admission, with the other member information being collected at a predetermined time after the admission.

In STEP 286, the segment information collection unit 254 collects segment information indicating which segment the member virtual store 223 of the member 213 belongs to.

A segment is defined as a group of customers having common needs in the market and similar in item I (product and service) recognition manner, valuing, and use method, and process to purchase, that is, purchase behavior. It is necessary to use axis suitable for dividing the market into parts each corresponding to a specific segment. The virtual store provision system 201 defines each of segments of items I by one or more axes.

In the virtual store provision system 201, a plurality of axes can be set in order to identify segments. If segments subjected to comparison have different occupancy ranges on each axis, the two segments are determined to be different. For example, male age is set as an axis defining groups of customers. In the case where a first segment occupies a range of 10 years to 20 years on the axis and a second segment occupies a range of 50 years to 70 years on the axis in the type B questionnaire, the first segment and the second segment are determined to be different segments on the axis. In the case where the first segment occupies a range of 10 years to 30 years on the axis and the second segment occupies a range of 15 years to 20 years on the axis, the first segment and the second segment are determined to be segments that partially overlap on the axis.

In the virtual store provision system 201, occupancy ranges of segments on each axis are not limited to be defined by numeric values. Occupancy ranges not defined by numeric values, such as genres of member items 224, are also applicable. In the virtual store provision system 201, a plurality of (at least two, preferably at least three or four) axes for identifying segments are set, as mentioned above. For example, male age is set as a first axis relating to customers, and region (an example of an axis in which occupancy ranges are not defined by numeric values) is set as a second axis relating to customers. In the case where the first segment occupies a coordinate range of 30 years to 40 years on the first axis and the second segment occupies a coordinate range of 30 years to 40 years on the first axis, the two segments are the same segment on the first axis. In the case where the first segment occupies Hokkaido on the second axis and the second segment occupies Kyushu on the second axis, the two segments are different segments on the second axis. That is, in the case where the segments subjected to comparison are different on at least one axis, the two segments are different segments.

Thus, in the virtual store provision system 201, it is possible to appropriately set axes for identifying segments and identify a segment of each member virtual store 223. When identifying the segment of each member virtual store 223, it is not necessary to condition that all member items 224 of the member virtual store 223 belong to the same segment. If at least a predetermined proportion (e.g. 90%) of the member items 224 belong to the same segment, the segment can be determined as the segment of the member virtual store 223. Each member item 224 not belonging to the segment is processed as an exceptional member item 224 in the virtual store provision system 201.

Specifically, the segment information collection unit 254 performs segment information collection by issuing a segment survey questionnaire to cause the member 213 to answer a plurality of question items.

For example, the question items include survey items for customers as target (= viewers 217) and survey items for member items 224. The survey items for customers include gender (male/female), age group (e.g. 10s, 20s, ...), region of address (e.g. Hokkaido, Kyushu, Kanagawa Prefecture, Chiba City), occupation (e.g. student), hobby (e.g. movie watching, travel, sport, fishing), and the like. The survey items for member items 224 include genre (e.g. men's kimono) and price range (e.g. 10,000 yen or less).

The segment of each member virtual store 223 can be basically identified based on several axes (referred to as "basic axes" as appropriate) that are determined based on the member's answers to the survey items for customers as target (= viewers 217) in the segment survey questionnaire. Alternatively, the segment of each member virtual store 223 may be identified based on both the basic axes and axes (referred to as "additional axes" as appropriate) that are determined based on the member's answers to the survey items for member items 224 with respect to the basic axes, or may be identified based on only the additional axes in some cases.

The segment information is information that can identify the segment determined in this way, and is generated based on the determined segment.

### [Virtual store provision system: selection of member item]

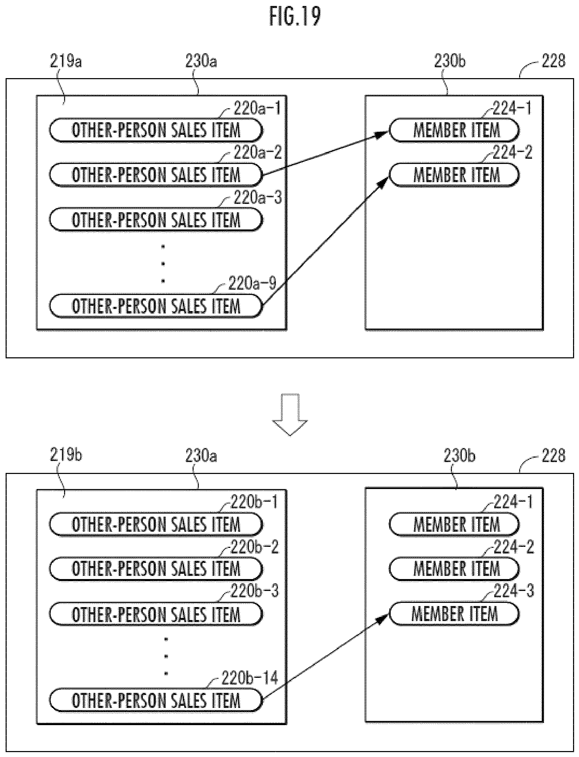

FIG. 19 is an explanatory diagram of an operation of each member 213 selecting one or more member items 224 to be posted on the member virtual store 223 of the member 213 using an application provided from the virtual store provision system 201. The application may be a dedicated application only for the process of each member 213 selecting each member item 224 of the member virtual store 223, or may be included as part of functions in a member support application as an integrated application.

The member 213 starts the application in the information device (e.g. personal computer) of the member 213, and displays a member item selection screen 228 illustrated in FIG. 19 as a predetermined screen on a display unit.

The member item selection screen 228 includes an other-person web part 230a on the left and a member web part 230b on the right. In each of the upper member item selection screen 228 and the lower member item selection screen 228 in FIG. 19, the member web part 230b on the right corresponds to a web page of the member virtual store 223 of the member 213. On the other hand, the other-person web part 230a on the left displays a web page of an other-person virtual store 219 different between the upper and lower member item selection screens 228. For convenience of explanation, to distinguish the two other-person virtual stores 219, the other-person virtual store of the other-person web part 230a in the upper member item selection screen 228 is given reference sign "219a", and the other-person virtual store of the record information acquisition unit 230a in the lower member item selection screen 228 is given reference sign "219b".

Other-person sales items 220a-1 to 220a-9 are displayed in the other-person web part 230a of the other-person virtual store 219a. Other-person sales items 220b-1 to 220b-14 are displayed in the other-person web part 230a of the other-person virtual store 219b. In FIG. 19, the other-person sales items 220a-1 to 220a-9 and 220b-1 to 220b-14 are depicted in blocks for simplification. In actual model of the invention, they are shown not in blocks but in images, icons, or text from which viewers 217 can concretely understand what items of products or services (e.g. reservation of accommodation or concert or reservation of transportation) are presented.

The member 213 selects the other-person sales items 220a-2 and 220a-9 from the other-person sales items 220a-1 to 220a-9 in the other-person virtual store 219a, as member items 224-1 and 224-2 of the member virtual store 223 of the member 213. The member 213 also selects the other-person sales item 220b-14 from the other-person sales items 220b-1 to 220b-14 in the other-person virtual store 219b, as a member item 224-3 of the member virtual store 223 of the member 213. The member items 224-1 to 224-3 are provided with link item information to the other-person sales items 220a-2, 220a-9, and 220b-14, respectively.

The operation of selecting the other-person sales items 220a-2, 220a-9, and 220b-14 on the member item selection screen 228 by the member 213 is performed by drag and drop of the other-person sales items 220a-2, 220a-9, and 220b-14 from the other-person web part 230a to the member web part 230b. As a result, the member items 224-1, 224-2, and 224-3 become the same images as the other-person sales items 220a-2, 220a-9, and 220b-14 of the hyperlink destinations.

After the selection of the member items 224 of the member virtual store 223 of the member 213 by the member 213 is completed, the application ends. Subsequently, the application may be started again to select and add a member item 224 as appropriate. To delete a member item 224, the member item 224 to be deleted is moved from the member web part 230b to the outside by drag and drop.

The application can issue an item selection reason questionnaire to the member 213 when the member 213 newly adds a member item 224. An example of the item selection reason questionnaire is a questionnaire that combines the foregoing type A questionnaire 47 in FIG. 6 and type B questionnaire 50 in FIG. 7. The link item information provision unit 256 accumulates answer information relating to the member 213's answers to the item selection reason questionnaire in the D/B 210. The item proposal server 2 (FIG. 1) generates reference information based on the answer information, and accumulates the reference information in the D/B 8.

A viewer 217 designates a subdomain of a member virtual store 223, and views member items 224 in the designated member virtual store 223. If the viewer 217 finds a member item 224 which the viewer 217 likes, the viewer 217 moves a cursor to the member item 224 which the viewer 217 likes, and performs a hyperlink use operation such as click or tap. As a result, the screen of the display unit in the information device of the viewer 217 switches from the web page of the member virtual store 223 to the web page of the other-person virtual store 219 on which the other-person sales item 220 of the hyperlink destination is posted.

For the hyperlink use operation on each member item 224 of each member virtual store 223 by the viewer 217, the segment information provision unit 255 accumulates the hyperlink use operation in the D/B 210 as hyperlink operation history. The operation history includes the date and time of the operation.

The viewer 217 performs a purchase procedure for the other-person sales item 220 of the hyperlink destination in the web page of the other-person virtual store 219 after moving through the hyperlink. The purchase procedure includes payment of money, arrangement of delivery, and the like. Thus, each member virtual store 223 simply introduces the other-person sales item 220 of the hyperlink destination by posting the hyperlinked member item 224, so that the member 213 of the member virtual store 223 can omit a complicated purchase procedure with the viewer 217.

Therefore, the member 213 can open and operate the member virtual store 223 with reduced funds, labor, and bankruptcy risk.

The advertising agency server 208 is managed by an advertising agency. For each member item 224 of each member virtual store 223, the hyperlink use operation on the member item 224 by the viewer 217 is accumulated online in the D/B 210 as hyperlink operation history, as mentioned above. The operator of the virtual store provision system 201 transmits such operation history-related information accumulated in the D/B 210 to the advertising agency server 208 via the Internet 4 periodically or when needed.

Based on the received operation history, the advertising agency server 208 collects advertisement fee from the other person of the other-person virtual store 219 in the form of money. Specifically, the advertising agency server 208 collects, from the other-person virtual store 219, money corresponding to the number of hyperlink operations for the other-person sales item 220 of the other-person virtual store 219 of the other person from the member virtual store 223 in the virtual store provision system 201.

The advertising agency server 208 distributes the advertisement fee collected from the other-person virtual store 219 to the provider (also the owner) of the virtual store provision system 201 and the member 213 of the member virtual store 223 subjected to the hyperlink use operation by the viewer 217, periodically or as appropriate. Here, the advertising agency server 208 receives collection handling fee of a predetermined ratio to the advertisement fee. The advertising agency server 208 then distributes the remaining amount between the provider of the virtual store provision system 201 and the member 213 at a predetermined distribution ratio.

### [Virtual store provision system: browser screen of viewer]

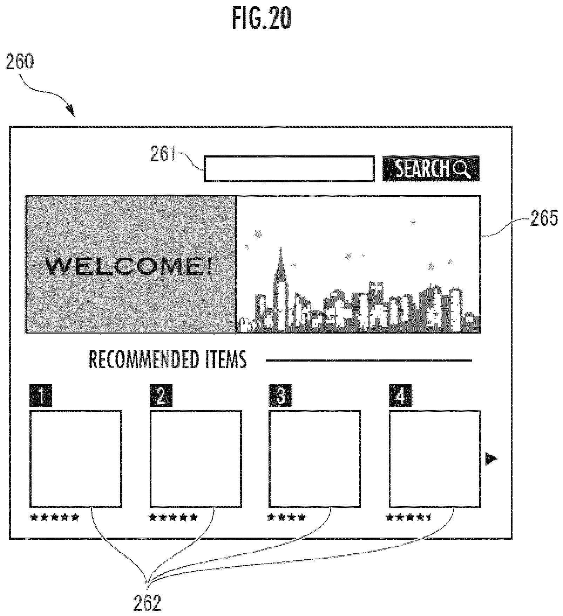

FIG. 20 illustrates a top web page 260 of a portal site of the virtual store provision system 201. The top web page 260 also serves as a menu web page of the portal site. When the virtual store provision system 201 also serves as the item proposal system 1, the top web page 260 may be the item presentation page 11a (FIG. 1). The top web page 260 in FIG. 20 also serves as the item presentation page 11a, and is described and displayed on the browser of the viewer terminal 216.

In the top web page 260, a search window 261 and a plurality of proposed item windows 262 are displayed together with a banner 265. When the top web page 260 also serves as the item presentation page 11a, one or more proposed items selected by the item proposal unit 34 are displayed on the corresponding proposed item windows 262.

The search window 261 is used only for search in the site. When the viewer 217 searches for a member virtual store 223 conforming to his or her consumption tendency (e.g. market segment), the store name of the member virtual store 223 may be input to the search window 261 to instruct search.

The viewer 217 can input, to the search window 261, each of one or more phrases the viewer 217 is interested in, and then search for a member virtual store 223. Consequently, member virtual store 223 that correlates with the input phrase is displayed. For example, when the viewer 217 inputs each of "car", "travel", and "golf' as extraction information groups in FIG. 14 to the search window 261 and then performs search, a member virtual store 223 that contains all of "car", "travel", and "golf' as member items 224 is displayed. Together with or apart from the member virtual store 223 that contains all of "car", "travel", and "golf', a member virtual store 223 having "metabolic syndrome countermeasure goods" or "camping equipment" in FIG. 15 as a market segment may be displayed, too.

### Description of Reference Numerals

- 1: item proposal system
- 2: item proposal server
- 3: terminal
- 4: Internet
- 8: D/B
- 11a: item presentation page
- 11b: web page
- 12: website
- 29: assignment unit
- 30: record information acquisition unit
- 31: extraction unit
- 32: information group detection unit
- 33: search unit
- 34: item proposal unit
- 35: transmission unit
- 39: recording unit
- 40: number determination unit
- 41: result information storage unit
- 47: type A questionnaire
- 50: type B questionnaire
- 47t, 50t, 55: answer
- 201: virtual store provision system
- 205: segment specialization server
- 213: member
- 217: viewer
- 219: other-person virtual store
- 223: member virtual store

## Claims

1. An item proposal system comprising: a server communicable with a plurality of terminals; and a database connected to the server, the server comprising a processor and a storage device including computer program code executed by the processor,
wherein the storage device and the computer program code are configured to cause the processor to
accumulate, in the database, reference information in which each item as a reference item, a reference phrase as a phrase associated with the reference item, and a reference attribute as an attribute of a target customer for which the reference item is intended are associated with each other;
set reference information having a same reference phrase among the reference information in the database as one information group, and assign, to each information group, a group attribute that characterizes an attribute of the information group based on a reference attribute of reference information belonging to the information group;
acquire, from the terminal accessing a first website, record information generated in the terminal as a result of the terminal accessing a second website different from the first website;
extract one or more user phrases associated with an item from the acquired record information;
detect, as an extraction information group, an information group corresponding to a reference phrase that matches each extracted user phrase;
search for a non-extraction information group that is an information group different than the detected extraction information group and whose reference attribute correlates with a reference attribute of the extraction information group;
select a reference item of the searched non-extraction information group, as a proposed item; and
transmit information of the proposed item, to the terminal.

2. The item proposal system according to claim 1, wherein the reference phrase of the extraction information group and a reference phrase of the non-extraction information group do not overlap even partially in phrase concept.

3. The item proposal system according to claim 1, wherein the reference phrase of the extraction information group and a reference phrase of the non-extraction information group either overlap only partially in phrase concept or are in a relationship of a broader concept and a narrower concept.

4. The item proposal system according to any one of claims 1 to 3, wherein the storage device and the computer program code are configured to, with the processor, further cause to
when the terminal accesses the first website for a first time, assign an ID to the terminal and record the assigned ID in the record information of the terminal;
determine, for the terminal accessing the first website, the number of accesses to the first website by the terminal, based on the ID extracted from the record information of the terminal; and
transmit the information of the proposed item to the terminal only when the determined number of accesses is less than or equal to a threshold.

5. The item proposal system according to claim 4, wherein the storage device and the computer program code are configured to, with the processor, further cause to
store and accumulate, each time the terminal accesses the first website, result information relating to an item-related processing operation by the terminal on the first website; and
when the determined number of accesses is greater than the threshold, search, as a result-related item, an item relating to the stored-and-accumulated result information and transmit, to the terminal, information of the searched result-related item.

6. The item proposal system according to any one of claims 1 to 5, wherein each piece of reference information is generated based on answer information of one or more answerers to a questionnaire relating to the reference item, the reference phrase, and the reference attribute.

7. The item proposal system according to claim 6, wherein the questionnaire includes, for each item, questions causing the answerer to answer a first phrase little influenced by a subjective view of the answerer and a second phrase greatly influenced by the subjective view of the answerer, and
wherein the reference phrase is a combination of one or more first phrases and zero or more second phrases.

8. The item proposal system according to claim 7, wherein when a store owner of an intermediary virtual store provides a link to an original item sold in an original virtual store of another person to select the item as an intermediary item presented in the intermediary virtual store, the answer information is based on an answer by the store owner, to the questionnaire regarding the intermediary item.

9. The item proposal system according to claim 8, wherein each intermediary virtual store is associated with a predetermined market segment.

10. The item proposal system according to claim 9, wherein each intermediary virtual store is provided on the first website.
